# EUROPEAN PATENT APPLICATION

(11) **EP 3 714 686 A1**
(43) Date of publication of application: **30.09.2020**
(21) Application number: 19166145.3
(22) Date of filing: 29.03.2019
(51) Int. Cl.: A01K 5/02

(54) **POWERED FEED VEHICLE**

(71) Applicant: Hedensted Gruppen A/S, 8722 Hedensted (DK)
(72) Inventor: Christiansen, Kim, 5464 Brenderup (DK); Lange, Kent, 8763 Rask Mølle (DK); Christensen, Michael, 8660 Skanderborg (DK); Madsen, Jens Jørgen, 5220 Odense SØ (DK)
(74) Representative: COPA Copenhagen Patents

(57) **Abstract**

A powered feed vehicle (1) for feeding minks raised in cages having wire mesh top walls comprises a feed container (8) a feed discharge arm (10) for discharging feed on a wire mesh top wall. The feed discharge arm (10) comprises an integral conveying arrangement (12) communicating at a lower end thereof with a pump outlet of a pump (15) having a pump inlet communicating with the interior of the container. The conveying arrangement (12) is configured to convey a line of feed from the pump (15) to an upper end part (17) thereof.

A dislodging device (23) is attached to and arranged above the upper end part (17) of the conveying arrangement (12) of the feed discharge arm (10) and comprises a dislodging member (28) having an engagement face for engaging the leading portion of the line of feed and being movable along the upper surface of the upper end part (17) in contact therewith for dislodging the leading portion of the line of feed supported on the upper end part (17) by pushing it beyond an edge of the upper end part.

## Description

### Field of the Invention

The present invention relates to a powered feed vehicle for feeding fur animals, especially minks, raised in cages having wire mesh top walls and being arranged in longitudinal rows in fur farms, said vehicle having a longitudinal axis, a front, a back, a first lateral side and a second lateral side and comprising a frame supported by wheels and carrying a feed container with at least one inner space for storing pasty feed, especially pasty mink feed, and at least one feed discharge arm for discharging feed on the wire mesh top wall and a programmable feeding control unit for controlling the amount of feed delivered to the individual cages, the feed discharge arm being connected to the container and extending laterally upward outwardly of the feed container and comprising an integral conveying arrangement communicating at an lower end thereof with a pump outlet of a pump means having an pump inlet communicating with the interior of the container, the conveying arrangement being configured to convey a line of feed from the outlet of the pump to an upper end of the conveying arrangement of the feed discharge arm.

### Background of the Invention

Powered feed vehicles of the above kind are known both as manned and unmanned feed vehicles, see e.g. EP 3 036 991 A1, DK 176402 B1 and WO 2008/1016500 A1.

### Summary of the Invention

The object of the present invention is to provide a feed vehicle allowing for discharging a precise and predetermined amount of feed precisely on a predetermined point on the top walls of cages. An additional object of the present invention is to prevent feed dropping through the mesh openings of the wire mesh top wall of mink cages when a feed portion is delivered to the top wall. A further object is to reduce the power needed for delivering the feed to the top wall of cages.

The feed vehicle according to the present invention is characterized in that:
- the upper end of the conveying arrangement of the feed discharge arm comprises an upper end part having an upper end surface configured to support a leading portion of the line of feed and angled relative to the upstream previous part of the conveying arrangement to face upwardly during operation of the feed vehicle and the arm thereof, and in that
- a dislodging device is attached to and arranged above the upper surface of the end part of the conveying arrangement of the feed discharge arm and comprises a dislodging member having an engagement face for engaging the leading portion of the line of feed and being movable by means of a dislodging drive along the upper surface of the upper end portion in close proximity to or in contact therewith for dislodging a separated leading portion of the line of feed supported on the upper end part from the upper end part by pushing it beyond an edge of the upper end part.

The line of feed is moved up on the upper surface of the upper end part of the conveying arrangement. On the upper surface, a leading portion of the line of feed corresponding to the desired amount of feed to be delivered to a cage is separated from the remainder of the line of feed, i.e. cut off from the line of feed. Thereafter, the separated portion of the line of feed is dislodged from the upper surface by means of the dislodging member moving along the upper surface. By controlling the speed of the movement of the line of feed and controlling the point where the leading portion is separated from the remainder of the line of feed, a very precise amount of feed is separated from the line of feed, and then dislodged from the upper surface and delivered to the to the top wall of a cage. Additionally, a very precise amount of feed and a very precise delivery of the precise amount of feed to the desired precise point of the top wall of the cage is obtained by synchronizing the forward moving speed of the vehicle with the speed of the movement of the line of feed, the separation of a leading portion of the line of feed and the speed of movement of the dislodging member along the upper surface of the upper end of the conveying arrangement. Additionally, by pushing or ejecting the separated feed portion of feed beyond an edge of the upper surface of the upper end part of the conveying arrangement of the feed discharge arm, the feed portion will have an essentially horizontal velocity component when reaching the top wall of a cage. Thereby, the risk of feed dropping through the mesh openings and into the cage is avoided or reduced compared to the general situation where the feed portion drops essentially vertically down onto the wire mesh top wall.

The upper end surface of the upper end part can be arranged angled relative to the upstream previous part of the conveying arrangement to be arranged between -20° and +20° relative to horizontal during operation of the feed vehicle and the arm thereof.

The dislodging member can comprise a lower separating edge for separating a leading length of the line of feed from the remainder of the line of feed.

The pump means is preferably a displacement pump, such as a gear pump or a screw pump. A screw pump is at present preferred, as the power needed for driving such a pump is low.

According to an embodiment, the conveying arrangement of the feed discharge arm comprises a tubular element extending from the lower end thereof up to a feed discharge opening in the upper surface of the upper end part of the conveying arrangement of the feed discharge arm.

A feed portion is thereby by means of the pump pumped up to and above the upper surface of the upper end part of the conveying arrangement of the feed discharge arm and dislodged by the dislodging member.

The upper end part can be essentially plate-shaped.

The tubular element of the conveying arrangement of the feed discharge arm can comprise a lower tubular element section and an upper tubular element section, including the upper planar end portion, the first and second tubular element sections being telescopically connected/arranged, allowing for decreasing and increasing the length of the feed discharge arm, the upper tubular element section being movable between an retracted and an extended position relative to the lower tubular element section.

According to a further embodiment, the conveying arrangement of the feed discharge arm comprises a lower tubular element extending from the lower end thereof up to an outlet opening and an upper belt conveyor having an upper and a lower belt portion, an upper end of the lower tubular element including the outlet opening overlapping the upper belt portion of the belt conveyor, and the upper surface of the upper end part of the conveying arrangement being formed by the upper belt portion of an angled upper end part of the belt conveyor.

In this way, the pump pumps the line of feed up onto the upper belt portion of the belt conveyor and the belt conveyor moves the line of feed up to the upper end part where the leading portion of feed is dislodged by the dislodging member.

The advantage of this embodiment is that less power is needed for moving the line of feed upwardly by means of a belt conveyor than through tubular elements.

The outlet opening of the lower tubular element can be arranged in close proximity to the upper surface of the upper belt portion of the belt conveyor. In this way, a smooth transition of the line of feed is obtained from the outlet opening of the lower tubular element to the upper belt conveyer.

According to an embodiment, the upper belt portion of the belt conveyor is arranged parallel to an outlet axis of the outlet opening of the lower tubular element
According to a further embodiment, the upper belt conveyor is arranged longitudinally displaceable relative to the lower tubular element, allowing for decreasing and increasing the length of the feed discharge arm, the upper belt conveyor being movable between a retracted and an extended position relative to the tubular element. It is thereby possible to arrange the upper surface of the upper end part of the conveying arrangement in the desired height above the top wall of the cages.

According to an additional embodiment, the dislodging member is configured to be movable by means of the dislodging drive in a longitudinal direction along the upper surface of the upper end part as seen relative to the driving direction of the feed vehicle during operation of the feed vehicle and the arm thereof, i.e. in a direction parallel to the longitudinal axis of the feed vehicle.

According to a further embodiment, the dislodging member is configured to be movable by means of the dislodging drive in a transverse direction along the upper surface of the upper end part as seen relative to the driving direction of the feed vehicle during operation of the feed vehicle and the arm thereof, i.e. in a direction transversely to the longitudinal axis of the feed vehicle.

In fact, the dislodging member can be configured to be movable by means of the dislodging drive in any direction between longitudinal and transverse direction along the upper surface of the upper end part as seen relative to the driving direction of the feed vehicle during operation at the feed vehicle and the arm thereof, i.e. in any direction between a direction parallel to the longitudinal axis and a direction transversely to the longitudinal axis of the feed vehicle.
The dislodging drive of the dislodging member can be a linear actuator configured to move the dislodging member along the upper surface of the upper end part of the conveying arrangement.

The feed vehicle can, at the upper belt portion of the belt conveyor, comprise a separating member with a lower separating edge, the separating member being movable by means of a separating drive transversely towards and away from the upper surface of the upper belt portion for separating a leading portion of line of feed from the remainder line of feed.

The separating drive can be a linear actuator.

The separating member can be arranged upstream from the upper end part of the belt conveyor

According to an embodiment, the engagement face is a concave face, such as a U-shaped face as seen towards the upper surface of the upper end part of the conveying arrangement, the concave face facing in the direction of the dislodging member during dislodgement of a feed portion.

An optimal control of the feed portion being dislodged is thereby obtained.

The dislodging member can have plate shaped side walls providing the concave engagement face.

The engagement face of the dislodging member can be a planar face.

The dislodging member can be plate-shaped.

According to a further embodiment, the dislodging drive is configured to carry out the following movements of the dislodging member starting from a first position where the dislodging member is above the upper surface of the upper end part of the feed conveying arrangement:
- moving the dislodging member towards and into engagement with the upper surface
- moving the dislodging member along the upper surface,
- moving the dislodging member upwardly from the upper surface, and
- moving the dislodging member back to the first position

According to an embodiment, the dislodging drive comprises an elongated endless element guided around a drive roller at a first end and an idle roller at a second opposite end and being provided with one or more mutually spaced and combined separating and dislodging members projecting from the outer surface of the endless element.

According to a further embodiment, the dislodging drive can comprise one or more endless chains guided around a drive sprocket wheel at a first end and an idle sprocket wheel at a second opposite end and being provided with one or more mutually spaced and combined separating and dislodging members projecting from the outer surface of the endless chain(s).

Alternatively, the dislodging drive can comprise a belt conveyer provided with one or a number of mutually spaced and combined separating and dislodging members projecting from the outer surface of the belt.

According to a further embodiment, the upper surface of the upper end part of the conveyor arrangement of the feed arm can be essentially planar.

The upper surface of the upper end part of the conveyor arrangement of the feed arm can be concave as seen perpendicular to the longitudinal direction of a line of feed supported by the upper end portion.

According to an additional embodiment, the feed discharge arm is at a lower end thereof arranged pivotally relative to the container.

The feed discharge arm can be arranged pivotally around an axis being essentially parallel with the longitudinal axis of the vehicle.

According to a further embodiment, the feed discharge arm is at a lower end thereof arranged at the back of the vehicle, such as at the back of the container.

The feed vehicle can be an unmanned feed vehicle and being provided with a control unit configured to control the feed discharge arm, control the position of the vehicle and speed of the vehicle based on appropriate sensors, detectors and emitters and GPS technic. The feed vehicle can be considered and named a feed robot.

The feed vehicle can comprise a detector, such as a camera for determining the amount of feed present on the cage.

The feed vehicle can be electrically powered by a rechargeable battery.

### Brief Description of the Figures

Embodiments and examples of the invention will be described in more details in the following with regard to the accompanying figures. The figures show ways of implementing the present invention and are not to be construed as limiting to other possible embodiments falling within the scope of the attached set of claims.
Fig. 1 is a schematically perspective view of a first embodiment of a feed vehicle according to the invention, as seen obliquely from behind,
Fig. 2 is a schematically view of the feed vehicle shown in Fig. 1, seen from behind,
Fig. 3 is a schematically top view of the feed vehicle shown in Figs. 1 and 2,
Fig. 4 is a schematically top view of a modified example of the feed vehicle shown in Figs. 1 to 3,
Fig. 5 is a schematically perspective view of a second embodiment of a feed vehicle according to the invention, as seen obliquely from behind,
Fig. 6 is a schematically view the second embodiment of the feed vehicle shown in Fig. 5, seen from behind,
Fig. 7 is a schematically top view of the second embodiment of the feed vehicle shown in Figs. 5 and 6,
Fig. 8 is in an enlarged scale a schematically perspective view of a feed discharge arm of the second embodiment of the feed vehicle shown in Figs. 5 to 7.

### Detailed Description of the Invention

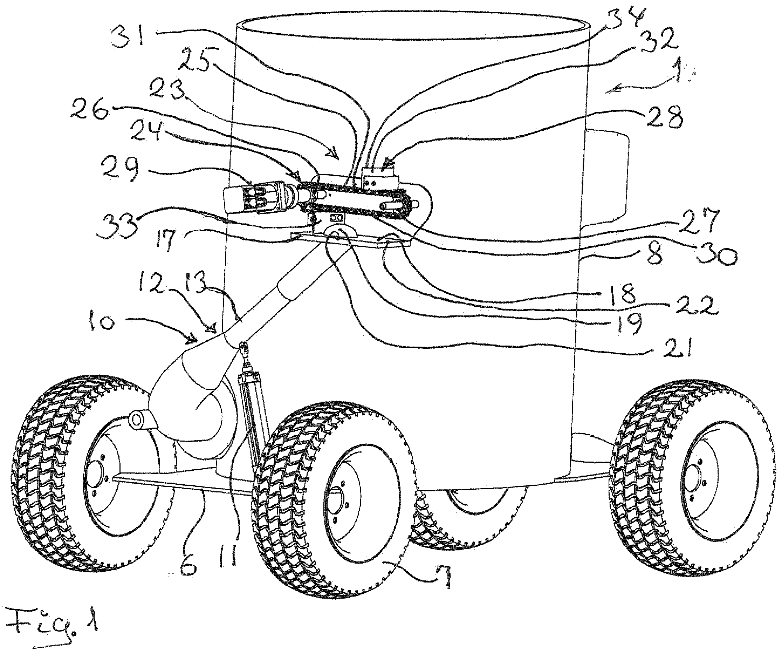

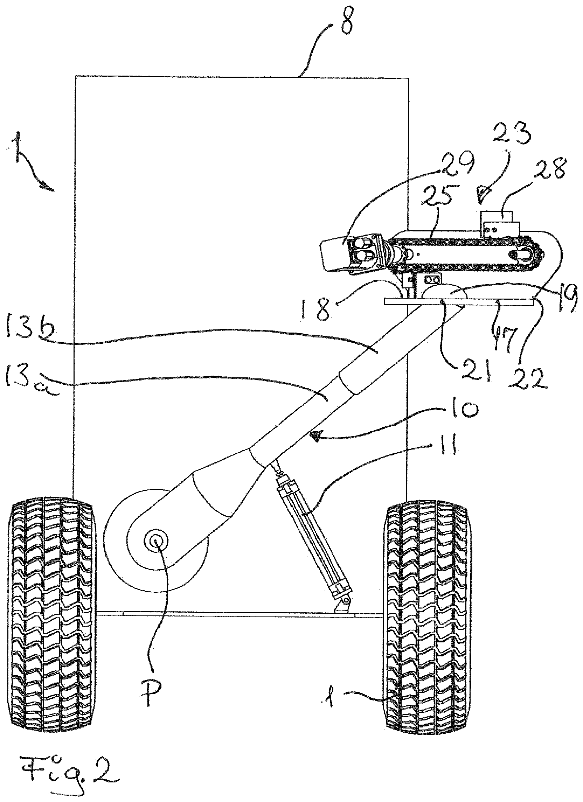

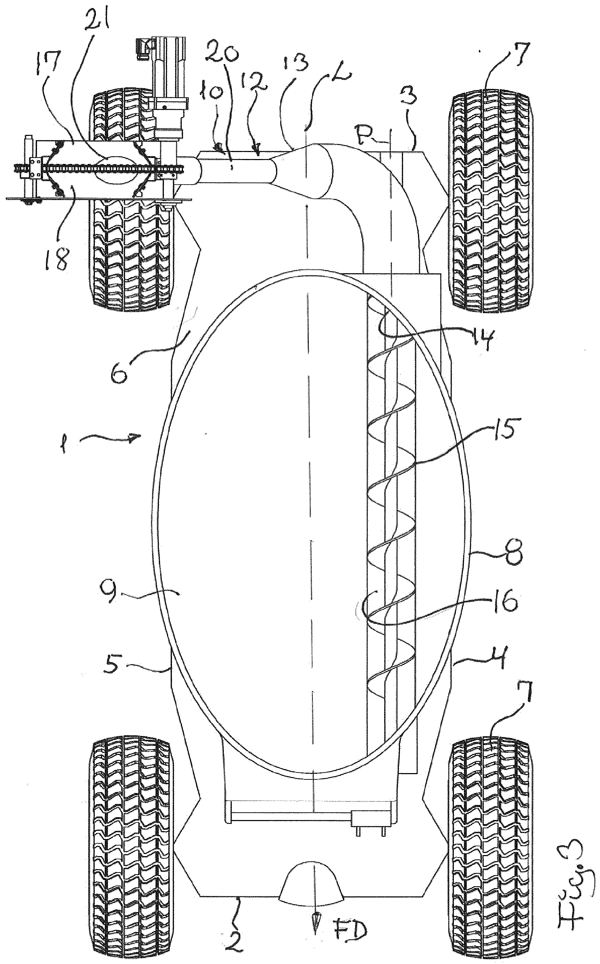

Reference is made to Figs. 1 to 3 disclosing a first embodiment of a powered unmanned feed vehicle 1 according to the present invention for feeding minks raised in mink cages having wire mesh top walls.

The feed vehicle 1 has a longitudinal axis L, a front 2, a back 3, a left lateral side 4 and a right lateral side 5 as seen in the forward driving direction FD of the vehicle 1, and comprises a frame 6 supported by four steerable wheels 7 and carrying a feed container 8 having an inner space 9 for storing feed.

Additionally, the feed vehicle 1 comprises a feed discharging arm 10 for discharging feed from the feed container 8 on the wire mesh top walls of the cages and a not shown programmable feeding control unit for controlling the amount of feed delivered to the individual cages.

The feed discharge arm 10 is at the back 3 of the vehicle 1 connected pivotally to the lower end of the rear of the feed container 8. The feed discharge arm is, by means of a linear actuator 11, pivotal between the shown operating position and a rest position around a pivot axis P being essentially parallel to the longitudinal axis L of the vehicle 1. In the shown operating position, the feed discharge arm 10 extends outside the feed container 8 upwardly and laterally beyond a lateral side of the vehicle 1 in order to deliver feed to the top walls of the cages. The feed discharge arm 10 extends upwardly and laterally in a plane being essentially perpendicular to the longitudinal axis L of the vehicle 1 and is pivoted in said plane. In the rest position, the feed discharge arm is pivoted to a more upright position to be positioned within the lateral boundaries of the vehicle 1 defined by the lateral sides and/or the wheels 7 of the vehicle 1.

The feed discharge arm 10 comprises an integral conveying arrangement 12 communicating at a lower end thereof with a pump outlet 14 of a screw pump 15 having a pump inlet 16 communicating with the interior of the feed container 8 and being configured to convey a line of feed from the pump outlet 14 of the pump 15 to an upper end of the conveying arrangement. The upper end of the conveying arrangement 12 comprises an upper end part 17 having an upper end surface 18 configured to support a leading portion 19 of the line of feed and angled relative to the upstream previous part to be arranged essentially horizontally during operation of the feed vehicle 1 and the arm 10 thereof. By essentially horizontally is to be understood within the interval +20° and -20° relative to horizontal.

The conveying arrangement 12 comprises a tubular element 13 having an inner surface defining an outer surface or the non-visible line of feed 20 and having, at its lower end communicating with the pump outlet 14, a large diameter gradually passing into a smaller diameter and ending in a discharge outlet 21 opening in the upper end surface 18 of the upper end part 17. In the present embodiment, the upper end part 17 is formed by a plate having a plate edge 22.

The tubular element 13 of the conveying arrangement of the feed discharge arm comprises a lower tubular element section 13a and an upper tubular element section 13b including the upper plate-shaped end part 17. The first and second tubular element sections 13a,13b are telescopically connected, allowing for decreasing and increasing the length of the feed discharge arm 10, the upper tubular element section being 13b movable between a retracted and an extended position relative to the lower tubular element section 13a.

The discharge arm 10 additionally comprises a dislodging device 23 attached to and arranged above the upper end surface 18 of the plate-shaped upper end part 17 of the conveying arrangement 12 of the discharging arm 10. The dislodging device 23 comprises, in the present embodiment, a dislodging drive 24 comprising an endless chain 25 guided around a drive sprocket wheel 26 at a first end and an idle wheel at a second opposite end and being provided with two mutually spaced and combined separating and dislodging members 28 projecting from the outer surface of the chain 25. The chain is configured to be driven by a motor 29 driving the drive sprocket wheel 26. The chain and thereby the dislodging elements follow between the sprocket wheels 26,27 a linear lower dislodging path 30 and an upper return path 31.

Each of the dislodging members 28 are U-shaped and comprise a U-shaped plate 32 forming a side wall having a concave engagement face 33 configured to engage the leading portion 19 of the line of feed and a lower edge configured to be moved along the upper end surface 18 of upper plate-shaped end part 17 of the conveying arrangement 12 of the discharging arm 10.

In the above dislodging device 23, the chain 25 extends essentially perpendicular to the longitudinal axis L of the feed vehicle 1, and the feed is correspondingly dislodged in a direction being essentially perpendicular to the longitudinal axis L of the vehicle. However, by arranging the dislodging device so that the chain thereof extends at an angle different from perpendicular to the longitudinal axis L of the vehicle 1, the feed can be dislodged at any desired angle relative to the longitudinal axis L of the vehicle 1, such as e.g. parallel to the longitudinal axis L of the vehicle. The dislodging device 23 can be arranged to dislodge the feed in a direction having a velocity component opposite to the forward driving direction FD of the vehicle 1 and thereby reduce the velocity at which the feed portion lands on the wire mesh top wall of a cage.

When a leading portion 19 of the line of feed comprising the desired amount of feed to be delivered to a cage has been moved up onto and extends above and is supported by the upper end surface 18 of the upper plate-shaped end part 17, a dislodging member 28 is moved along the lower linear dislodging path 30 of the dislodging drive 24 and passes the discharge outlet 21 opening in the upper end surface 18. Thereby, the leading portion 19 of the line of feed extending above and being supported by the upper end surface 18 is separated from the remainder of the line of feed subsequently dislodged by being pushed beyond the plate edge 22 of the plate-shaped upper end part 17. The desired amount of feed is thereby delivered to the desired point of the upper wire mesh wall of a cage, as the speed of the pump i.e. the speed of the line of feed and thereby the amount of feed extending above the upper end surface 18 and the speed of the dislodging drive are mutually adapted and coordinated appropriately.

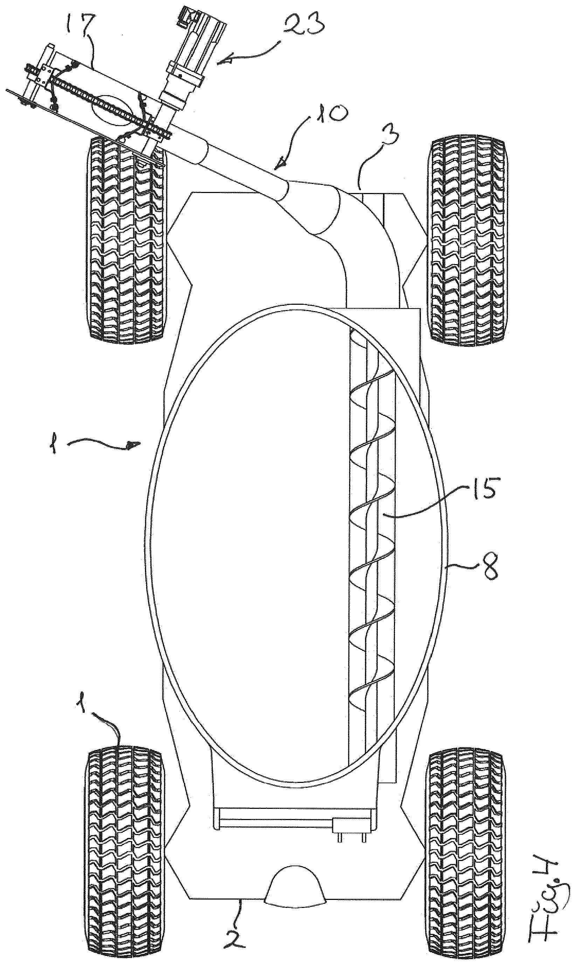

The modified example of the first embodiment shown in Fig. 4 differs from the first embodiment shown in Figs. 1 to 3 in that the feed discharge arm is slanted in rearward direction to be pivoted in a plane forming an angle to the longitudinal axis L of the vehicle 1. Due to the rearward slanting of the feed discharge arm, a feed portion will be dislodged by the dislodging device 23 with a velocity component in a direction opposite to the forward driving direction FD of the feed vehicle 1 and the velocity at which the feed portion lands on the wire mesh top wall of a cage thereby reduced.

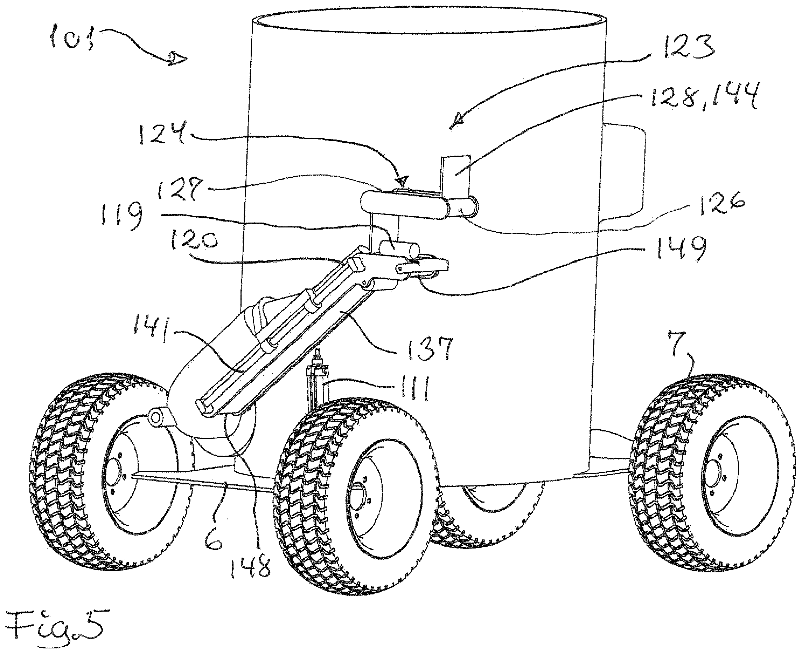

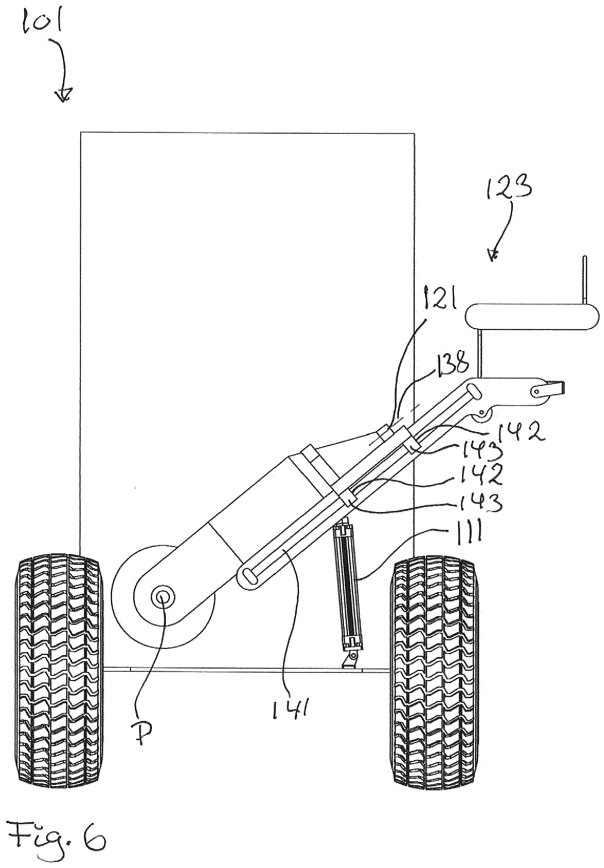

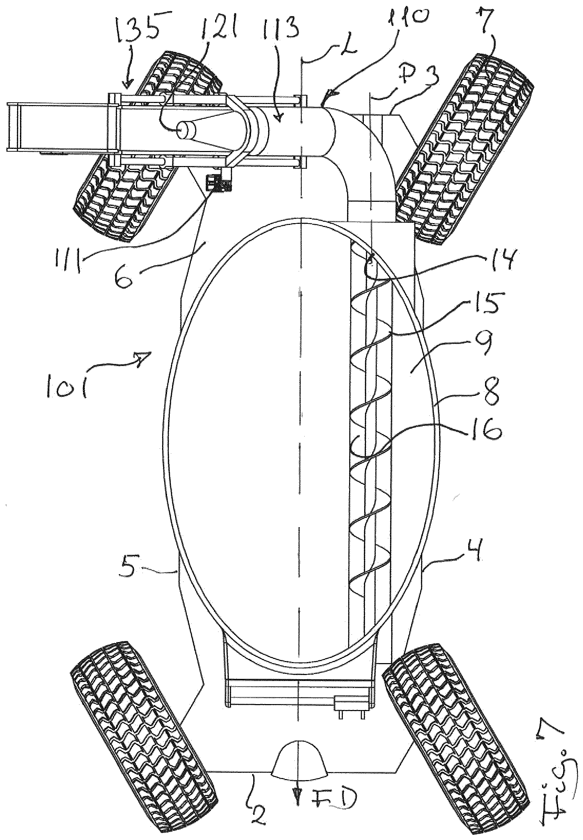

Reference is now made to Figs. 5 to 8 disclosing a second embodiment of a powered unmanned feed vehicle 101 according to the present invention for feeding minks raised in mink cages having a wire mesh top wall.

The second embodiment is essentially identical to the first embodiment disclosed in Figs. 1 to 3 apart from the feed discharge arm and the conveying arrangement and the dislodging device thereof.

The feed vehicle 101 has a longitudinal axis L, a front 2, a back 3, a left lateral side 4 and a right lateral side 5 as seen in the forward driving direction FD of the vehicle 1 and comprises a frame 6 supported by four steerable wheels 7 and carrying a feed container 8 having an inner space 9 for storing feed. Additionally, the feed vehicle 101 comprises a feed discharging arm 110 for discharging feed from the feed container 8 on the wire mesh top walls of the cages and a not shown programmable feeding control unit for controlling the amount of feed delivered to the individual cages.

The feed discharge arm 110 is at the back 3 of the vehicle 101 connected pivotally to the lower end of the rear of the feed container 8. The feed discharge arm is by means of a linear actuator 111 pivotal between the shown operating position and a rest position around a pivot axis P being essentially parallel to the longitudinal axis L of the vehicle 101. In the shown operating position, the feed discharge arm 110 extends outside the feed container 8 upwardly and laterally beyond a lateral side of the vehicle 1 in order to deliver feed to the top walls of the cages. The feed discharge arm 110 extends upwardly and laterally in a plane being essentially perpendicular to the longitudinal axis L of the vehicle 101 and is pivoted in said plane. In its resting position, the feed discharge arm is pivoted to a more upright position to be positioned within the lateral boundaries of the vehicle 1 defined by the lateral sides and/or the wheels 7 of the vehicle 101.

The feed discharge arm 110 comprises an integral conveying arrangement 112 communicating at a lower end thereof with a pump outlet 14 of a screw pump 15 having a pump inlet 16 communicating with the interior of the feed container 8 and being configured to convey a line of feed from the pump outlet 14 of the pump 15 to an upper end of the conveying arrangement. The upper end of the conveying arrangement 112 comprises an upper end part 117 having an upper end surface 118 configured to support a leading portion 119 of the line of feed and angled relative to the upstream previous part to be arranged essentially horizontally during operation of the feed vehicle 101 and the arm 110 thereof. By essentially horizontally is to be understood within the interval +20° and -20° relative to horizontal.

The conveying arrangement 112 comprises a lower tubular element 113 having an inner surface defining an outer surface of the line of feed 120 and having, at its lower end communicating with the pump outlet 14, a large diameter gradually passing into a smaller diameter and ending in an outlet opening 121 defining the diameter of the line of feed when leaving the lower tubular element 113. The conveying arrangement 112 additionally comprises an upper belt conveyor 135 comprising an endless belt guided around a lower belt reversing member 148 and an upper belt reversing member 149. The upper belt reversing member can be a drive roller and the lower belt reversing member can be an idle roller. The endless belt has an upper belt portion 136 and a lower belt portion 137. The upper belt portion 136 of the belt conveyor 125 is parallel to the outlet axis 138 of the outlet opening 121 and an upper end portion of the lower tubular element 113 including the outlet opening 121 overlaps the upper belt portion 136 of the upper belt conveyor 135. The outlet opening 121 of the lower tubular element 113 is arranged in close proximality to the upper surface 139 of the upper belt portion 136 of the belt conveyor 135, whereby a smooth transition of the line of feed 120 is obtained from the lower tubular element 113 to the upper surface 139 of the upper belt conveyor 135 moving the line of feed further upwards to the upper end surface 118 of the upper end part 117.

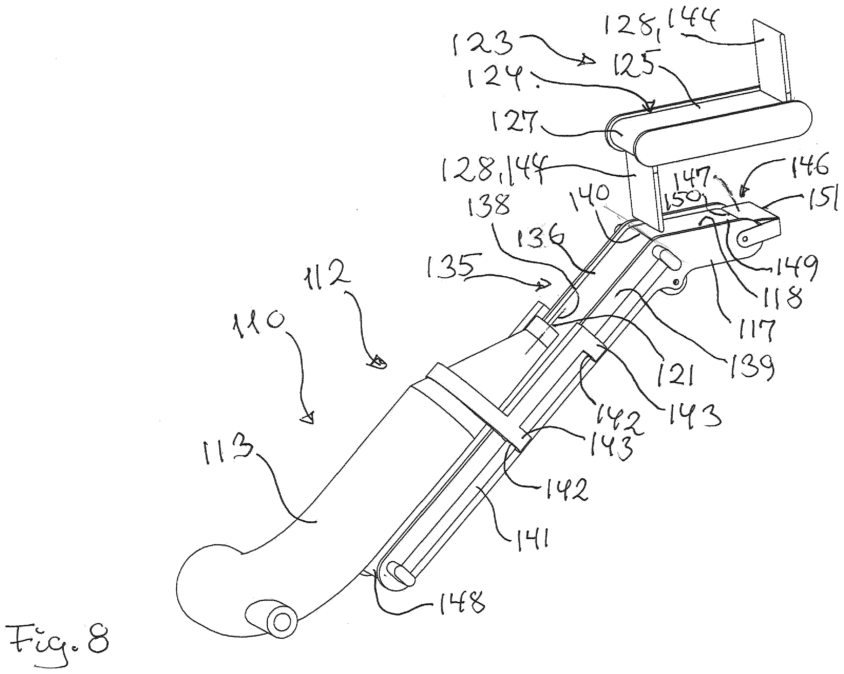

The upper end surface 118 of the upper end part 117 of the conveying arrangement 112 is formed by the upper belt portion 136 of an angled upper end part of the belt conveyor 135, the angled upper end part providing a line 140 of change of movement direction of the upper belt portion between of the upper belt portion upstream of the upper end part 117 and on the upper end part 117 of the belt conveyor 135. As most clearly shown in Fig. 8, the conveying arrangement 112 may also comprise an outlet member 146 being arranged at the upper belt reversing element 147 and having an upper outlet surface 147 providing an extension of the upper end surface 118 of the upper belt portion of the belt conveyor 135 and having a proximal edge 150 arranged in close proximity to the belt on the upper reversing element 149 and a distal edge 151 spaced from the proximal edge as seen in the moving direction of the upper belt portion 136. The outlet member 146 can be angled relative to the upper surface of the upper angled belt part to arrange the upper outlet surface of the outlet member at positions between a descending and ascending position relative to the upper surface of the adjacent upper band portion.

The upper belt conveyor 135 of the conveying arrangement 112 of the discharge arm 110 is arranged longitudinally displaceable relative to the lower tubular element 113 by means of parallel rods 141 connected to the upper belt conveyor on opposite sides thereof being guided in guide openings 142 of guide members 143 connected to the lower tubular element 113 on opposite sides thereof. The above structure of the discharge arm 110 allows for adapting the length of the discharge arm to the level of the top wall of the cages and arranging the upper end surface 118 of the upper end part 117 in the desired height above the top wall of the cages.

The discharge arm 110 additionally comprises a dislodging device 123 attached to and arranged above the upper end surface 118 of the upper belt portion 136 of the angled upper end part 117 of the upper belt conveyor 135 of the conveying arrangement 112 of the discharging arm 110. The dislodging device 123 comprises in the second embodiment a dislodging drive 124 comprising an endless belt 125 guided around a drive roller 126 at a first and an idle roller 127 at a second opposite second end and being provided with two mutually spaced and combined separating and dislodging members 128 projecting from the outer surface of the belt 125. The belt 125 and thereby the dislodging members 128 follow a linear lower dislodging path 130 between the rollers 126, 127 and an upper return path 131.

Each of the dislodging members 128 is a planar plate 144 having a lateral engagement face 145 configured to engage the leading portion 119 of the line of feed and a lower edge 134 configured to be moved along the upper end surface 118 of the upper belt portion 136 of the angled upper end part 117 of the upper belt conveyor 135. However, the dislodging members could also be U-shaped as described above in relation to the first embodiment of the feed vehicle. The lower edge of the dislodging members can also serve as a separating edge separating a leading length of the line of feed from the remainder of the line of feed, whereby the dislodging member can be considered a combined separating and dislodging member.

The belt 125 of the dislodging device 123 extends essentially perpendicular to the longitudinal axis L of the feed vehicle 101 and the feed is correspondingly dislodged in a direction being essentially perpendicular to the longitudinal axis L of the vehicle.

However, the dislodging device could be arranged in such a way that the belt of the dislodging device extends perpendicular to the longitudinal axis of the feed vehicle or in any direction between parallel to and perpendicular to the longitudinal axis of the vehicle.

When a leading portion 119 of the line of feed comprising the desired amount of feed to be delivered to a cage has been pumped up to and extends on and is supported by the upper end surface 118 of the upper belt portion 136 of the angled upper end part 117 of the upper belt conveyor 135, a dislodging member 128 is moved around the lower belt reversing member 148 engaging the leading length of the line of feed essentially at the line 140 of change of movement direction and subsequently along the lower linear dislodging path 130 of the dislodging drive 124. Thereby, the leading portion 119 of the line of feed supported by the upper end surface 118 of the upper belt portion 136 of the angled upper end part 117 of the upper belt conveyor 135 is separated from the remainder of the line of feed, see Fig. 5, and subsequently dislodged by being pushed or ejected beyond the distal edge 151 of outlet member 146. The desired amount of feed is thereby delivered to the desired point of the upper wire mesh wall of a cage, as the speed of the pump i.e. the speed of the line of feed in the lower tubular element and on the upper belt portion and thereby the amount of feed delivered to the upper end surface 118 and the speed of the dislodging drive are mutually adapted and coordinated appropriately.

It should be noted that instead of engaging the leading length of the line of feed essentially at the line 140 of change of movement direction, the dislodging member 128 could engage the line of feed on the upper surface of the upper belt portion and thereby separate and subsequently dislodge the separated portion of the line of feed.

Further, it should be noted that the outlet member could be dispensed with and the separated leading portion 119 of the line of feed could be dislodged or ejected directly from the upper surface of the belt conveyor.

Additionally, it should be noted that the conveying arrangement of the feed discharging arm could, at the upper belt portion of the belt conveyor, comprise a separating member with a lower separating edge, the separating member being movable by means of a separating drive, e.g. a linear activator, transversely towards and away from the upper surface of the upper belt portion for separating a leading portion of line of feed from the remainder line of feed. The separating member could be arranged upstream from the upper end part of the belt conveyor whereby pieces of the line of feed are separated from the line of feed when reaching the upper end part where only a dislodgment of the separated pieces of line of feed should take place.

### LIST OF REFERENCE NUMERALS

- 1, 101: feed vehicle
- 2: front
- 3: back
- 4: left side
- 5: right side
- 6: frame
- 7: wheel
- 8: feed container
- 9: inner space
- 10,110: feed discharging arm
- 11,111: linear actuator
- 12,112: conveying arrangement
- 13: tubular element
- 13a: lower tubular element
- 13b: upper tubular element
- 14: pump outlet
- 15: pump
- 16: pump inlet
- 17,117: upper end part
- 18,118: upper end surface
- 19,119: end portion of line of feed, leading portion of line of feed
- 20,120: line of feed
- 21: discharge outlet
- 22: plate edge
- 23,123: dislodging device
- 24,124: dislodging drive
- 25: chain
- 26: drive wheel
- 27: idle wheel
- 28,128: dislodging member
- 29: motor
- 30,130: lower dislodging path
- 31,131: upper return path
- 32: U-shaped plate
- 33: concave engagement face
- 34,134: lower edge
- 113: lower tubular element
- 121: outlet opening
- 125: endless belt
- 126: drive roller
- 127: idle roller
- 135: upper belt conveyor
- 136: upper belt portion
- 137: lower belt portion
- 138: outlet axis of outlet opening 121
- 139: upper surface of upper belt portion
- 140: line of change of direction
- 141: rods
- 142: guide opening
- 143: guide members
- 144: planar plate
- 145: engagement face
- 146: outlet member
- 147: upper outlet member surface
- 148: lower belt reversing member
- 149: upper belt reversing member
- 150: proximal edge
- 151: distal edge
- FD: forward driving direction
- L: longitudinal axis
- P: pivot axis

## Claims

1. A powered feed vehicle for feeding fur animals, especially minks, raised in cages having wire mesh top walls and being arranged in longitudinal rows in fur farms, said vehicle having a longitudinal axis, a front, a back, a first lateral side and a second lateral side and comprising a frame supported by wheels and carrying a feed container with at least one inner space for storing pasty feed, especially pasty mink feed, and at least one feed discharge arm for discharging feed on a wire mesh top wall and a programmable feeding control unit for controlling the amount of feed delivered to the individual cages, the feed discharge arm being connected to the container and extending laterally upward outwardly of the feed container and comprising an integral conveying arrangement communicating at an lower end thereof with a pump outlet of a pump means having a pump inlet communicating with the interior of the container, the conveying arrangement being configured to convey a line of feed from the outlet of the pump to an upper end of the conveying arrangement of the feed discharge arm, wherein
- the upper end of the conveying arrangement of the feed discharge arm comprises an upper end part having an upper end surface configured to support a leading portion of the line of feed and angled relative to the upstream previous part of the conveying arrangement to face upwardly during operation of the feed vehicle and the arm thereof, and
- a dislodging device is attached to and arranged above the upper surface of the end part of the conveying arrangement of the feed discharge arm and comprises a dislodging member having an engagement face for engaging the leading portion of the line of feed and being movable by means of a dislodging drive along the upper surface of the upper end portion in close proximity to or in contact therewith for dislodging the leading portion of the line of feed supported on the upper end part from the upper end part by pushing it beyond an edge of the upper end part.

2. A feed vehicle according to claim 1, wherein the conveying arrangement of the feed discharge arm comprises a tubular element extending from the lower end thereof up to a feed discharge opening in the upper surface of the upper end part of the conveying arrangement of the feed discharge arm.

3. A feed vehicle according to any of the preceding claims, wherein the conveying arrangement of the feed discharge arm comprises a lower tubular element extending from the lower end thereof up to an outlet opening and an upper belt conveyor having an upper and a lower belt portion, an upper end of the lower tubular element including the outlet opening overlapping the upper belt portion of the belt conveyor, and the upper surface of the upper end part of the conveying arrangement being formed by the upper belt portion of an angled upper end part of the belt conveyor.

4. A feed vehicle according to claim 3, wherein the outlet opening of the lower tubular element is arranged in close proximity to the upper surface of the upper belt portion of the belt conveyor.

5. A feed vehicle according to claim 3 and/or 4, wherein the upper belt portion of the belt conveyor is arranged parallel to an outlet axis of the outlet opening of the lower tubular element.

6. A feed vehicle according to any of claims 3-5, wherein the upper belt conveyor is arranged longitudinally displaceable relative to the lower tubular element, allowing for decreasing and increasing the length of the feed discharge arm, the upper belt conveyor being movable between a retracted and an extended position relative to the tubular element.

7. A feed vehicle according to any of claims 1-6, wherein the dislodging member is configured to be movable by means of the dislodging drive in a longitudinal direction along the upper surface of the upper end part as seen relative to the driving direction of the feed vehicle during operation of the feed vehicle and the arm thereof, i.e. in a direction parallel to the longitudinal axis of the feed vehicle.

8. A feed vehicle according to any of claims 1-6, wherein the dislodging member is configured to be movable by means of the dislodging drive in a transverse direction along the upper surface of the upper end part as seen relative to the driving direction of the feed vehicle during operation of the feed vehicle and the arm thereof, i.e. in a direction transversely to the longitudinal axis of the feed vehicle.

9. A feed vehicle according to any of the preceding claims, wherein the engagement face of the dislodging member is a concave face, such as a U-shaped face as seen towards the upper surface of the upper end part of the conveying arrangement, the concave face facing in the direction of the dislodging member during dislodgement of a feed portion.

10. A feed vehicle according to any of the preceding claims, wherein the dislodging drive is configured to carry out the following movements of the dislodging member starting from a first position where the dislodging member is above the upper surface of the upper end part of the feed conveying arrangement:
- moving the dislodging member towards and into engagement with the upper surface,
- moving the dislodging member along the upper surface,
- moving the dislodging member upwardly from the upper surface, and
- moving the dislodging member back to the first position.

11. A feed vehicle according to any of the preceding claims, wherein the dislodging drive comprises an elongated endless element guided around a drive roller at a first end and an idle roller at a second opposite end and being provided with one or more mutually spaced and combined separating and dislodging members projecting from the outer surface of the endless element.

12. A feed vehicle according to any of the preceding claims, wherein the dislodging drive can comprise one or more endless chains guided around a drive sprocket wheel at a first end and an idle sprocket wheel at a second opposite end and being provided with one or more mutually spaced and combined separating and dislodging members projecting from the outer surface of the endless chain(s).

13. A feed vehicle according to any of the preceding claims, wherein the upper surface of the upper end part of the conveyor arrangement of the feed arm can be essentially planar.

14. A feed vehicle according to any of the preceding claims, wherein the feed discharge arm is at a lower end thereof arranged pivotally relative to the container.

15. A feed vehicle according to any of the preceding claims, wherein the feed discharge arm is at a lower end thereof arranged at the back of the vehicle, such as at the back of the container.
